# EUROPÄISCHE PATENTSCHRIFT

(11) **EP 2 859 629 B1**
(45) Veröffentlichungstag und Bekanntmachung des Hinweises auf die Patenterteilung: **03.06.2020**
(21) Anmeldenummer: 13740231.9
(22) Anmeldetag: 15.07.2013
(51) Int. Cl.: H02B 13/045

(54) **DRUCKBEHÄLTERANORDNUNG MIT EINEM LÄNGENVERÄNDERLICHEN KOMPENSATIONSABSCHNITT**
PRESSURE TANK ARRANGEMENT WITH A VARIABLE LENGTH COMPENSATION SECTION
AGENCEMENT DE RÉSERVOIR SOUS PRESSION AVEC UNE SECTION DE COMPENSATION DE LONGUEUR VARIABLE

(30) Priorität: 31.07.2012 DE 102012213438
(43) Veröffentlichungstag der Anmeldung: 15.04.2015
(73) Patentinhaber: Siemens Aktiengesellschaft, 80333 München (DE)
(72) Erfinder: RAUTENBERG, Steffen, 12161 Berlin (DE); SCHMIDTKE, Markus, 16540 Hohen Neuendorf (DE)
(86) Internationale Anmeldenummer: PCT/EP2013/064893
(87) Internationale Veröffentlichungsnummer: WO 2014/019838

(56) Entgegenhaltungen:
- DE-A1-102008 027 642
- DE-A1-102008 027 644
- US-A- 3 001 801
- US-A1- 2011 000 922

## Beschreibung

Die Erfindung bezieht sich auf eine Druckbehälteranordnung mit einem längenveränderlichen Kompensationsabschnitt, welcher ein erstes und ein zweites Behälterelement aufweist, die relativ zueinander bewegbar und über eine Dichtungsanordnung miteinander fluiddicht verbunden sind, wobei die Dichtungsanordnung mit einer Gleitdichtung verbunden ist, welche Teil einer druckfesten Fluidbarriere ist.

Die DE 10 2008 027 642 A1 offenbart eine Druckbehälteranordnung mit den Merkmalen des Oberbegriffs des Anspruchs 1. Dort ist ein längenveränderlicher Kompensationsabschnitt beschrieben, welcher ein erstes und ein zweites Behälterelement aufweist, wobei die beiden Behälterelemente relativ zueinander bewegbar sind. Die beiden Behälterelemente sind miteinander fluiddicht verbunden, wobei eine Dichtungsanordnung zum Einsatz gelangt. Die Dichtungsanordnung weist vorliegend eine Gleitdichtung auf, wobei ein Dichtkörper auf einer Gleitfläche fluiddicht geführt ist. Bei der bekannten Konstruktion ist vorgesehen, einem Dichtkörper zwei Gleitlager zuzuordnen. Die Gleitlager nehmen zum einen eine Führungs- und Leitfunktion war. Zum anderen reinigen die Gleitlager die Gleitfläche von gegebenenfalls anhaftenden Schmutzpartikeln. Die Reinigungswirkung der Gleitlager ist begrenzt und führt im Lauf einer Nutzung zu einem Verschleiß. Gegebenenfalls kann auch am Dichtkörper unerwünschter Verschleiß auftreten. Um einem Verschleißen entgegenzuwirken, ist ein vergleichsweise geringer Kompensationshub an der bekannten Druckbehälteranordnung realisiert.

Entsprechend sind zur Erzielung von größeren Kompensationshüben mehrere Druckbehälteranordnungen miteinander zu verbinden, um deren Kompensationshübe zu addieren. Eine derartige Lösung ist relativ kostenintensiv, wobei weiterhin ein Verschleiß an Dichtkörpern und den bekannten Gleitlagern auftritt.

Aus der Veröffentlichung US 2011/000922 A1 geht eine Druckbehälteranordnung mit einem längenveränderlichen Kompensationsabschnitt hervor, wobei ein erstes und ein zweites Behälterelement miteinander teleskopierbar verbunden sind. Um eine fluiddichte Barriere an der Druckbehälteranordnung auszubilden, ist der Einsatz eines Faltenbalges vorgesehen.

Aus dem US-Patent US 3,001,801 geht ein Rohrverbinder hervor, welcher einen Dichtbalg zwischen zu verbindenden Rohren aufweist, wobei ein Leckage-Abfluss vorgesehen ist.

Der Offenlegungsschrift DE 10 2008 027 644 A1 ist eine Kapselungsgehäuseanordnung mit einem längenveränderlichen Kompensationsabschnitt entnehmbar. Dabei sind ein erster und ein zweiter Rohrabschnitt über eine Dichtungsanordnung miteinander verbunden, wobei die Dichtungsanordnung mit einer Gleitdichtung verbunden ist. Weiter ist als fluiddichte Barriere ein Faltenbalg genutzt.

Durch die Verwendung eines Faltenbalges ist die fluiddichte Barriere einer kontinuierlichen Verformung unterworfen. Als Teil einer Druckbehälterwandung ist der Faltenbalg zusätzlich zur mechanischen Umformung einer Überdruckbeanspruchung ausgesetzt, so dass eine vorzeitige Alterung zu befürchten ist.

Somit ergibt sich als Aufgabe der Erfindung, eine Druckbehälteranordnung anzugeben, welche bei reduziertem Verschleiß größere Kompensationshübe realisieren kann.

Erfindungsgemäß wird die Aufgabe bei einer Druckbehälteranordnung der eingangs genannten Art dadurch gelöst, dass die Dichtungsanordnung und die Gleitdichtung von einem Hüllmantel umgriffen sind, welcher innenmantelseitig und außenmantelseitig von einem oder mehreren differenzdruckausgeglichenen Medium/Medien umspült ist.

Druckbehälteranordnungen mit einem längenveränderlichen Kompensationsabschnitt werden eingesetzt, um beispielsweise infolge von thermischen Einflüssen im Material auftretende Dimensionsänderungen zu kompensieren und ein Auftreten von Spannungsrissen zu vermeiden. Eine derartige Druckbehälteranordnung ist beispielsweise einsetzbar, um ein elektrisch isolierendes Fluid innerhalb der Druckbehälteranordnung einzukapseln. Als elektrisch isolierendes Fluid sind beispielsweise elektrisch isolierende Gase, wie Schwefelhexafluorid oder Flüssigkeiten, wie Isolieröle verwendbar. Das elektrisch isolierende Fluid kann beispielsweise im Innern der Druckbehälteranordnung unter Überdruck gehalten sein. Das elektrisch isolierende Fluid kann eingesetzt werden, um eine elektrisch isolierende Strecke zwischen einem innerhalb der Druckbehälteranordnung angeordneten Phasenleiter, zu einer Innenwandung der Druckbehälteranordnung, sicherzustellen. Eine Druckbehälteranordnung mit fluidisoliertem Phasenleiter ist beispielsweise ein Teil einer Elektroenergieübertragungseinrichtung. Derartige Einrichtungen können beispielsweise als sogenannte druckgasisolierte Schaltanlagen oder druckgasisolierte Schaltgeräte ausgestaltet sein.

Behälterelemente sind vorzugsweise Teil einer fluiddichten Barriere. Ebenso sollte die Dichtungsanordnung Teil einer fluiddichten Barriere sein. Beispielsweise kann die Dichtungsanordnung eine fluiddichte Barriere zwischen den Behälterelementen darstellen. Behälterelemente sowie Dichtungsanordnung können ein- oder mehrteilig ausgeführt sein. Behälterelemente können beispielsweise in Form von Rohrstutzen oder Rohrabschnitten ausgeformt sein, wobei die Rohrstutzen mit ihren Zylinderachsen bevorzugt koaxial zueinander ausgerichtet sind. Bevorzugt sollten die Rohrstutzen einander stirnseitig beabstandet gegenüberstehen und längs der Zylinder relativ zueinander bewegbar sein. So kann beispielsweise vorgesehen sein, dass die Stutzen während eines Kompensationshubes zunächst miteinander stirnseitig nahezu in Berührung stehen, um voneinander entfernt werden zu können. Entsprechend kann umgekehrt auch vorgesehen sein, dass einander zugewandte Stirnseiten der Behälterelemente voneinander entfernt sind und dann aufeinander zubewegt werden, um eine Längenänderung auszugleichen. Die Behälterelemente können je nach Relativlage einander stirnseitig nahezu berühren. Zwischen den einander zugewandten Stirnseiten ist so ein dimensionsveränderlicher Kompensationsspalt angeordnet. Dieser Kompensationsspalt kann zumindest teilweise, insbesondere vollständig von der Dichtungsanordnung überbrückt sein.

Die Behälterelemente selbst stellen jeweils einen Abschnitt einer fluiddichten Barriere zur Verfügung, so dass von dem ersten Behälterelement zu dem zweiten Behälterelement beispielsweise ein Fluidübergang ermöglicht ist. Die beiden Behälterelemente sollten mittels der Dichtungsanordnung miteinander fluiddicht verbunden sein, wobei auch bei einer Bewegung die Fluiddichtigkeit der Druckbehälteranordnung erhalten bleibt. Die Dichtungsanordnung kann beispielsweise ein elastisch verformbares Element, beispielsweise in Form eines verformbaren Balges, aufweisen, wobei der Balg beispielsweise innen- oder außenmantelseitig an stutzenförmigen Behälterelementen anliegt und eine Relativbewegung der Behälterelemente zueinander unter reversibler Formänderung ausgleicht. Es können jedoch auch alternative Dichtungsanordnungen Verwendung finden. Beispielsweise kann zumindest an einem der Behälterelemente eine teleskopartige Dichtungsanordnung verwendet werden. Die Dichtungsanordnung kann gleitend fluiddicht an zumindest einem Behälterelement anliegen.

Die Nutzung eines Hüllmantels, welcher die Dichtungsanordnung umgreift, weist den Vorteil auf, dass die Dichtungsanordnung vor unmittelbaren äußeren Einwirkungen geschützt ist. Dabei stellt die Dichtungsanordnung einen Teil einer fluiddichten Barriere dar, wobei der Hüllmantel vorzugsweise beabstandet zu der Dichtungsanordnung angeordnet ist. Somit ist es mit zwangsweise nötig, den Hüllmantel als Teil einer fluiddichten Barriere für ein innerhalb der Druckbehälteranordnung eingeschlossenes Fluid zu wirken. Der Hüllmantel selbst kann so beispielsweise frei von Differenzdruckkräften verformt werden. Als Hüllmantel kann beispielsweise ein Balg eingesetzt werden, welcher die Dichtungsanordnung umgibt und diese vorzugsweise auf ihrer gesamten Länge überspannt. Als Balg kann beispielsweise ein metallischer Balg, vorzugsweise ein metallischer Faltenbalg Verwendung finden, so dass zusätzlich zu einem mechanischen Schutz der Dichtungsanordnung auch eine dielektrische Schirmung der Dichtungsanordnung gegeben ist. Weiter ist durch den Hüllmantel in dessen umgriffenen Bereich ein Raum zur Verfügung gestellt, welcher vor unmittelbar angreifenden äußeren Einwirkungen schützt. Somit können die zur Ausbildung der Dichtungsanordnung notwendigen Baugruppen, bevorzugt hinsichtlich ihrer Dichtfunktion bzw. hinsichtlich ihrer abdichtenden Wirkung, ausgelegt werden. So können beispielsweise innerhalb der Hüllkontur des Hüllmantels auch vergleichsweise empfindliche Materialien zum Einsatz gelangen. So können z. B. auch Materialien zum Einsatz gelangen, welche beispielsweise unter UV-Einwirkung zu einem Verspröden neigen, wobei der Hüllmantel die Struktur der Dichtungsanordnung schützt. Weiter wird die Dichtungsanordnung vor Verschmutzungen geschützt, so dass einem vorzeitigen Verschleiß entgegengewirkt wird.

Somit ist es möglich, die Betriebsdauer und damit die Zuverlässigkeit der Funktion der Druckbehälteranordnung zu verbessern. Da nunmehr in Abhängigkeit der Dimensionierung des eingesetzten Hüllmantels der umgriffene Raum nahezu beliebig dimensioniert werden kann, kann die Druckbehälteranordnung auch für vergrößerte Kompensationshübe ausgelegt sein.

Weiterhin ist vorgesehen, dass die Dichtungsanordnung mit einer Gleitdichtung verbunden ist, welche Teil einer druckfesten Fluidbarriere ist.

Ein vergrößerter Hub, der nahezu unbegrenzt verlängerbar ist, kann beispielsweise unter Nutzung einer Gleitdichtung an der Dichtungsanordnung ausgebildet werden, wobei die Gleitdichtung einen Teil der fluiddichten Barriere der Druckbehälteranordnung ausbildet. Es kann beispielsweise vorgesehen sein, dass die Dichtungsanordnung teleskopartig bewegbar ist, d. h., entlang einer innen- oder außenmantelseitigen Gleitfläche ist beispielsweise ein Dichtelement der Dichtungsanordnung verschieblich gelagert, wobei die Gleitfläche eine Dichtfläche für das Dichtelement darstellt. Zwischen dem Dichtelement und der Gleitfläche ist eine Gleitdichtung ausgebildet. Die Gleitdichtung ist bevorzugt fluiddicht ausgeführt. Einem Dichtelement können auch ein oder mehrere Gleitelemente zugeordnet sein, welche eine Beabstandung des das Dichtelement aufnehmenden Körpers zu der Gleitfläche sicherstellen. Somit ist das Dichtelement vor einer übermäßigen Kraftbelastung geschützt. Beispielsweise kann an der Gleitfläche ein Dichtring abgestützt sein, welcher auf der Gleitfläche gleitend eine fluiddichte Barriere ausbildet. Bedarfsweise kann eine Gleitdichtung innenmantelseitig und außenmantelseitig, (d. h., ein Dichtelement kann innen- oder außenmantelseitig, insbesondere in sich geschlossen umlaufend, an einer Gleitfläche anliegen) ausgebildet sein.

Die Nutzung eines Hüllmantels schützt eine Gleitfläche vor einem Ablagern von Verschmutzungen, welche zu einem Verschleiß an einem Dichtelement bzw. an einem gegebenenfalls vorgesehenen Gleitelement führen könnte. Entsprechend ist nunmehr auch die Möglichkeit gegeben, die Gleitfläche zu vergüten, beispielsweise kann die Gleitfläche poliert sein oder auch eine Beschichtung, beispielsweise mit einem Gleitlack, aufweisen. Durch den Hüllmantel ist sichergestellt, dass die Qualität der Gleitfläche auch nach längerer Nutzung erhalten bleibt und insbesondere einem Ablagern von Verschmutzungen auf der Gleitfläche entgegengewirkt ist.

Eine weitere Ausgestaltung ist, dass der Hüllmantel innenmantelseitig und außenmantelseitig von einem oder mehreren differenzdruckausgeglichenen Medium/Medien umspült ist.

Der Hüllmantel ist von Druckkräften entlastet. Vorzugsweise sollte der Hüllmantel innen- sowie außenmantelseitig von ein und demselben Medium umspült sein, welches sowohl innen- als auch außenmantelseitig den gleichen Druck aufweist, so dass eine durch den Hüllmantel gebildete Wandung von Differenzdruckkräften freigehalten ist. Durch eine Differenzdruckfreiheit wird erreicht, dass die Stärke der Hüllmantelwandung reduziert werden kann, so dass eine leichte Verformbarkeit des Hüllmantels gegeben ist. So wird eine leichtgängige Relativbewegung im Kompensationsabschnitt unterstützt.

Beispielsweise kann innen- sowie außenmantelseitig am Hüllmantel atmosphärische Luft geführt sein, wobei gegebenenfalls eine Reinigung des innerhalb des Hüllmantels befindlichen Anteils erfolgt.

Eine weitere vorteilhafte Ausgestaltung kann vorsehen, dass der Hüllmantel elektrisch leitend mit den beiden Behälterelementen kontaktiert ist und eine Rückstrombrücke über der Dichtungsanordnung ausbildet.

Die Nutzung des Hüllmantels als Rückstrombrücke ermöglicht es, auch bei der Nutzung einer gegebenenfalls eine elektrisch isolierende Barriere darstellenden Dichtungsanordnung einen Mantel der Druckbehälteranordnung durchgängig elektrisch leitend auszugestalten. Somit ist es beispielsweise möglich, Fehlerströme, Rückströme, Kurzschlussströme, Wirbelströme usw. von einem Behälterelement zu einem anderen Behälterelement über die Rückstrombrücke übertreten zu lassen. Die Dichtungsanordnung kann beispielsweise insbesondere bei der Nutzung von elastischen, organischen oder anorganischen Dichtmitteln zumindest eine im ohmschen Widerstand erhöhten Bereich innerhalb der Druckbehälteranordnung darstellen.

Beispielsweise kann der Hüllmantel als metallischer Balg ausgebildet sein, welcher längenveränderlich ausgeführt ist. Es kann jedoch beispielsweise auch vorgesehen sein, dass der Hüllmantel beispielsweise in Form teleskopierbarer Rohrabschnitte ausgeführt ist, so dass über diese teleskopierbaren Rohrabschnitte ein elektrischer Strompfad zur Brückung der Dichtungsanordnung ausgebildet ist. Unabhängig von der Ausgestaltung des Hüllmantels sollte der Hüllmantel sowohl mit dem ersten als auch mit dem zweiten Behälter möglichst unmittelbar elektrisch leitfähig kontaktiert sein, beispielsweise indem der Hüllmantel an dem Behälter oder an Anbauteilen des Behälters abgestützt ist. Eine Nutzung von separaten Leiterbrücken zur elektrischen Kontaktierung der Behälterelemente ist somit nicht erforderlich.

Eine weitere vorteilhafte Ausgestaltung kann vorsehen, dass an den beiden Behälterelementen an voneinander abgewandten Enden jeweils ein Verbindungsflansch angeordnet ist, zwischen welchen sich der Hüllmantel erstreckt.

Die beiden Behälterelemente könnten beispielsweise in Form eines Rohres mit im Wesentlichen kreiszylindrischem Querschnitt ausgeformt sein, wobei Stirnseiten einander gegenüberstehend angeordnet sind. An den voneinander abgewandten Enden der Behälterelemente ist die Anordnung von jeweils einem Flansch möglich. Über einen Flansch ist eine Einkoppelung bzw. Verbindung der Druckbehälteranordnung mit weiteren Bauteilen, beispielsweise weiteren Druckbehälteranordnungen identischer oder abweichender Bauart, ermöglicht. Ein Flansch kann beispielsweise stoffschlüssig mit einem Behälterelement verbunden sein. Es kann jedoch auch vorgesehen sein, dass form- oder kraftschlüssige Verbünde zwischen dem Flansch und dem jeweiligen Behälterelement zum Einsatz kommen. Als Flansch eignet sich beispielsweise ein Ringflansch, welcher im Wesentlichen koaxial zu einer Zylinderachse eines Behälterelementes ausgerichtet ist. Über einen Ringflansch ist es vereinfacht möglich, eine Verbindung, insbesondere eine fluiddichte Verbindung zu weiteren Druckbehälteranordnungen auszubilden.

Lässt man den Hüllmantel von Flansch zu Flansch verlaufen, so hat dies den Vorteil, dass zum einen eine außenmantelseitige Überdeckung der Dichtungsanordnung hergestellt ist. Zum anderen kann der Hüllmantel neben einer vollständigen Überdeckung der Dichtungsanordnung auch die zwischen den endseitig angeordneten Flanschen erstreckenden Behälterelemente außenmantelseitig umgeben. Somit ist in einfacher Weise ein Schutz von der Dichtungsanordnung sowie der Behälterelemente vor außenmantelseitig einwirkenden Verschmutzungen oder chemischen Einwirkungen etc. gegeben. Beispielsweise kann der Hüllmantel mittels Losflanschanordnungen an den Flanschen festgelegt werden. Die Flansche sollten vorzugsweise elektrisch leitend mit dem jeweiligen Behälterelement verbunden sein, so dass bei einem Verflanschen des Hüllmantels mit einem der Flansche eine Abstützung über die Flansche an dem Behälterelement erfolgt und weiterhin eine elektrische Kontaktierung des Hüllmantels mit dem jeweiligen Behälterelement gegeben ist. Entsprechend ist in einfacher Weise ein mechanischer Schutz der Dichtungsanordnung gegeben und bei entsprechender elektrisch leitfähiger Ausgestaltung des Hüllmantels auch eine entsprechende Rückstrombrücke über der Dichtungsanordnung durch den Hüllmantel ausgebildet. So kann beispielsweise auf eine Nutzung separater Leiterbrücken verzichtet werden.

Eine weitere vorteilhafte Ausgestaltung kann vorsehen, dass ein Überströmkanal ein zwischen dem Hüllmantel und zumindest einem Behälterelement und/oder zwischen zumindest einem Behälterelement und der Dichtungsanordnung angeordnetes Hohlvolumen mit der Umgebung des Hüllmantels verbindet.

Der Hüllmantel umgibt und umgreift die Dichtungsanordnung bzw. zumindest abschnittsweise auch zumindest eines der Behälterelemente. Zwischen der innenmantelseitigen Fläche des Hüllmantels sowie dem geschützten Bereich der Behälterelemente ist ein Hohlvolumen begrenzt, welches vorzugsweise mit der Umgebung des Hüllmantels über einen Überströmkanal in Verbindung stehen sollte. Ebenso sollte ein zwischen einem Behälterelement und der Dichtungsanordnung angeordnetes Hohlvolumen über einen Überströmkanal mit der Umgebung des Hüllmantels in Kommunikation stehen. Der Überströmkanal kann sich beispielsweise in radialer Richtung durch den Hüllmantel erstrecken, so dass in einfacher Weise ein Druckausgleich geschaffen ist und innen- sowie außenmantelseitig am Hüllmantel ein differenzdruckkompensiertes Strömen eines Mediums möglich ist. Beispielsweise kann innerhalb des Überströmkanals eine Filteranordnung vorgesehen sein, welche ein Eindringen von Fremdstoffen in den von dem Hüllmantel geschützten Bereich verhindert. Beispielsweise kann in dem Überströmkanal eine Filteranordnung angeordnet sein, welches ein Hindurchströmen eines Gases gestattet, wohingegen flüssige Stoffe an einem Hindurchtreten gehindert sind. Dies kann beispielsweise nach Art einer Membran, welche innerhalb des Strömungsweges des Überströmkanals angeordnet ist, realisiert werden.

Über den Überströmkanal ist weiterhin auch ein Ein- bzw. Ausströmen eines insbesondere gasförmigen Mediums ermöglicht, so dass während eines Kompensationshubes auftretende Volumenänderungen in dem von dem Hüllmantel umgriffenem Bereich ausgeglichen werden, so dass sich innerhalb des Hüllmantels kein Über- bzw. Unterdruck einstellen kann. Entsprechend können Kompensationshübe frei von Gasdruckkräften am Hüllmantel durchgeführt werden. Während eines Kompensationshubes ist es weiterhin möglich, dass ein abgeschlossenes Volumen zumindest eines Behälterelementes und der Dichtungsanordnung in seiner Ausdehnung verändert wird. Mittels eines Überströmkanals kann einem Entstehen eines Überdruckes oder Unterdruckes entgegengewirkt werden.

Eine weitere vorteilhafte Ausgestaltung kann vorsehen, dass der Überströmkanal sich zumindest abschnittsweise durch einen Verbindungsflansch erstreckt.

Der Einsatz eines Flansches zur Ausgestaltung eines Überströmkanals ist insbesondere dann von Vorteil, wenn der Hüllmantel mit dem Verbindungsflansch verbunden ist. Der Verbindungsflansch weist zur Aufnahme von Verspann- und Haltekräften oftmals eine stärkere Wandung auf als der Hüllmantel selbst. Entsprechend kann sich der Kanal durch den Flansch erstrecken, ohne diesen in seiner mechanischen Stabilität im Übermaß zu schwächen. Beispielsweise kann der Flansch zu der Umgebung hin eine radial gerichtete Mündungsöffnung für den Strömungskanal bereitstellen, so dass selbst bei einem Verflanschen der Flansche weiterhin eine Kommunikation über den Strömungskanal gegeben ist, wobei die Mündungsöffnung radial am Umfang des Flansches frei von Überdeckungen durch weitere Flansche bleibt. Andererseits kann der Strömungskanal des Hohlvolumens in axialer Richtung in einem Hohlvolumen münden, so dass ein einfacher Anschluss des Strömungskanals gegeben ist. Beispielsweise kann der Strömungskanal durch das Einbringen einer radialen Bohrung sowie einer axialen Bohrung innerhalb des Flansches erzeugt werden, wobei die beiden Bohrungen jeweils nach Art einer Sackbohrung ausgeführt sind und erst durch eine Überschneidung der beiden Sackbohrungen ein durchgehender Strömungskanal in dem Flansch gebildet ist, welcher zum einen aus radialer Richtung und zum anderen aus axialer Richtung zugänglich ist.

Weiterhin kann vorteilhaft vorgesehen sein, dass die Druckbehälteranordnung ein Kompensationsvolumen aufweist, in welchem umgekehrt proportional zur Änderung eines Druckbehältervolumens eine Volumenänderung erfolgt, wobei das Kompensationsvolumen von dem Hüllmantel umgriffen ist.

Eine Ausstattung der Druckbehälteranordnung mit einem Kompensationsvolumen ermöglicht es, die bei einem Kompensationshub innerhalb der gekapselten Druckbehälteranordnung auftretende Volumenänderung in umgekehrt proportionaler Weise an dem Kompensationsvolumen auszugleichen. Zwischen den einander gegenüberstehenden Stirnseiten der Behälterelemente ist ein fluidgefüllter Kompensationsspalt befindlich, dessen Volumen sich bei einer Bewegung der Behälterelemente zueinander verändert. Ohne Ausgleichsvolumen würde es zu einer Druckänderung innerhalb der Druckbehälteranordnung kommen. Um dem entgegenzuwirken, erfolgt bei einer Volumenreduzierung des Kompensationsspaltes eine Vergrößerung des Kompensationsvolumens, wodurch ein Entstehen eines Überdruckes verhindert ist. Bei umgekehrter Volumenvergrößerung des Kompensationsspaltes wird durch eine Reduzierung des Kompensationsvolumens einem Entstehen eines Unterdruckes innerhalb der Druckbehälteranordnung entgegengewirkt. Ordnet man nunmehr das Kompensationsvolumen innerhalb des von dem Hüllmantel umgriffenen Bereiches an, so ist auch dieses Kompensationsvolumen selbst durch den Hüllmantel vor äußeren Zugriffen geschützt. Das Kompensationsvolumen kann beispielsweise als volumenveränderlicher Ausgleichsbehälter ausgeführt sein, welcher mit dem eingekapselten Volumen der Druckbehälteranordnung in Verbindung steht.

Weiterhin kann vorteilhaft vorgesehen sein, dass das Kompensationsvolumen zumindest teilweise von einer Kolben-Zylinder-Anordnung begrenzt ist, wobei der Kolben mit dem einen Behälterelement und der Zylinder mit dem anderen Behälterelement winkelsteif verbunden ist.

Ein Kompensationsvolumen kann beispielsweise dadurch ausgebildet werden, dass eine Kolben-Zylinder-Anordnung mit relativ zueinander bewegbarem Kolben und Zylinder genutzt wird, wobei eine Bewegung der Behälterelemente zueinander in proportionaler Weise auf die Kolben-Zylinder-Anordnung übertragen wird. Durch eine entsprechende Querschnittsdimensionierung des Zylinders bzw. des Kolbens kann eine Bewegung der Behälterelemente relativ zueinander zu einer umgekehrt proportionalen Änderung des Kompensationsvolumens der Kolben-Zylinder-Anordnung führen. Vorteilhafterweise kann ein winkelstarrer Verbund zwischen dem Kolben und dem einen Behälterelement sowie dem Zylinder und dem anderen Behälterelement vorgesehen sein. Beispielsweise kann vorgesehen sein, dass der Kolben ein Ringkolben ist, welcher seinerseits ein Behälterelement außenmantelseitig umgreift, so dass ein kompaktes Kompensationsvolumen gebildet ist, welches in einfacher Weise auch von dem Hüllmantel umgriffen werden kann. Beispielsweise kann vorgesehen sein, dass der Zylinder über Stehbolzen an einem der Behälterelemente abgestützt ist. Vorteilhafterweise sollte die Kolbenfläche der fluidbefüllten Querschnittsfläche des Kompensationsspaltes zwischen den Behälterelementen entsprechen.

Eine weitere vorteilhafte Ausgestaltung kann vorsehen, dass die Druckbehälteranordnung von einem elektrisch isoliert abgestützten Phasenleiter durchsetzt ist.

Ein elektrisch isolierter Phasenleiter dient der Übertragung eines elektrischen Stromes, wobei zu dessen elektrischer Isolation beispielsweise ein innerhalb der Druckbehälteranordnung befindliches elektrisch isolierendes Fluid zum Einsatz kommt. Ein Abstützen des Phasenleiters kann beispielsweise mittels eines Feststoffisolators erfolgen, der beispielsweise an einem der Behälterelemente angeschlagen ist und beabstandet von einer Wandung des Behälterelementes mit dem Phasenleiter verbunden ist. Entsprechend ist eine Positionierung des Phasenleiters innerhalb der Druckbehälteranordnung beabstandet zu einer Wandung der Druckbehälteranordnung ermöglicht. Derartige Druckbehälteranordnungen sind beispielsweise Teil von Elektroenergieübertragungseinrichtungen, die, getrieben von einer elektrischen Spannung, über den Phasenleiter einen elektrischen Strom übertragen.

Im Folgenden wird ein Ausführungsbeispiel der Erfindung schematisch an einer Zeichnung gezeigt und nachfolgend näher beschrieben. Dabei zeigen die
- Figur 1: einen Schnitt durch eine Druckbehälteranordnung mit einem ersten und einem zweiten Behälterelement und die
- Figur 2: eine Variante der in Figur 1 gezeigten Anordnung.

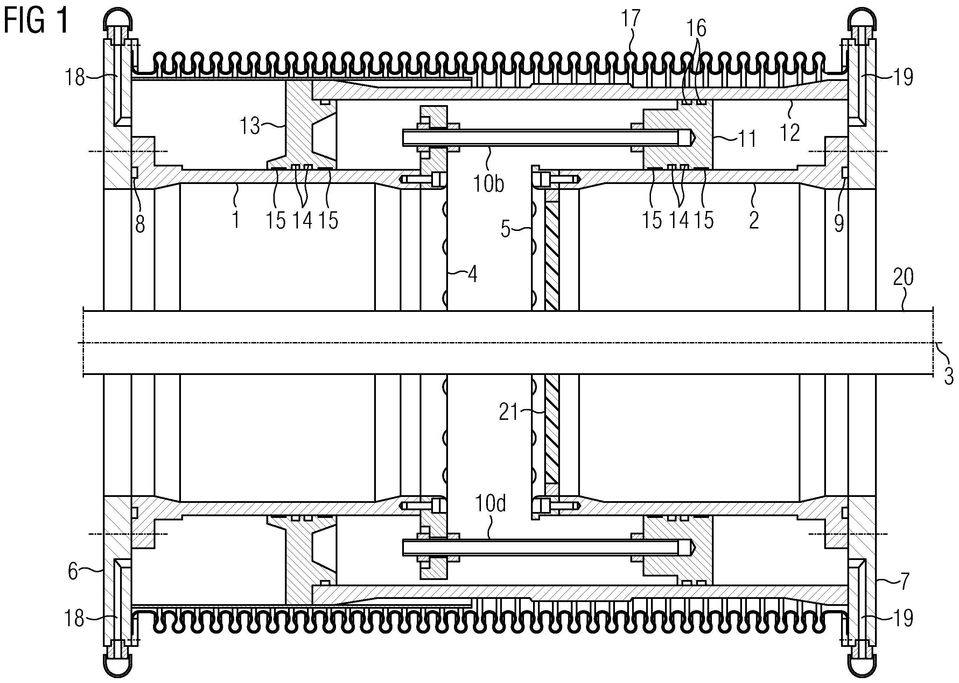

Die Figur 1 zeigt einen Schnitt durch eine Druckbehälteranordnung. Die Druckbehälteranordnung weist ein erstes Behälterelement 1 sowie ein zweites Behälterelement 2 auf. Das erste sowie das zweite Behälterelement 1, 2 sind im Wesentlichen rohrförmig ausgebildet, wobei die beiden Behälterelemente 1, 2 einen im Wesentlichen kreisringförmigen Querschnitt aufweisen. Das erste und zweite Behälterelement 1, 2 sind koaxial zueinander angeordnet, wobei beabstandet voneinander, unter Freilassung eines Kompensationsspaltes, Stirnseiten einander zugewandt sind. Die beiden Behälterelemente 1, 2 sind koaxial zu einer Symmetrieachse 3 angeordnet. An den einander zugewandten Stirnseiten ist am ersten Behälterelement 1 ein erster Stirnkörper 4 und am zweiten Behälterelement 2 ein zweiter Stirnkörper 5 angeordnet. Die Stirnkörper 4, 5 dienen einem dielektrisch günstigen Abschluss der Behälterelemente 1, 2, so dass der Kompensationsspalt dielektrisch geschirmt ist. Die beiden Stirnkörper 4, 5 sind jeweils über Gewindesackbohrungen mit dem jeweiligen Behälterelement 1, 2 verschraubt. Bevorzugt sollten die Behälterelemente 1, 2 gleichartig ausgeformt sein.

An den voneinander abgewandten Enden der beiden Behälterelemente 1, 2 ist am ersten Behälterelement 1 ein erster Anschlussflansch 6 sowie am zweiten Behälterelement 2 ein zweiter Anschlussflansch 7 angeordnet. Die beiden Anschlussflansche 6, 7 sind im Wesentlichen baugleich ausgeführt. Die beiden Anschlussflansche 6, 7 sind über Schraubverbindungen jeweils mit einer umlaufenden Schulter der Behälterelemente 1, 2, verschraubt. Sowohl die Behälterelemente 1, 2 als auch die Anschlussflansche 6, 7 sind aus elektrisch leitendem Material, insbesondere einem Metall, gefertigt und miteinander elektrisch leitend kontaktiert. Zwischen den verschraubten Anschlussflanschen 6, 7 sowie der zugehörigen umlaufenden Schulter ist jeweils ein Dichtungselement 8, 9 angeordnet, so dass ein fluiddichter Übergang zwischen den Anschlussflanschen 6, 7 sowie den Behälterelementen 1, 2 gegeben ist. Die Dichtungselemente 8, 9 sind in Form von koaxial zur Symmetrieachse 3 in sich geschlossenen umlaufenden elastisch verformbaren O-Ringen ausgebildet, die in einen Fügespalt zwischen dem jeweiligen Anschlussflansch 6, 7 sowie dem jeweiligen Behälterelement 1, 2 eingelegt sind.

Die beiden Behälterelemente 1, 2 sind im Wesentlichen gleichartig ausgeführt. Außenmantelseitig ist an jedem der beiden Behälterelemente 1, 2 jeweils eine bevorzugt kreiszylindermantelförmige Gleitfläche angeordnet. Die Gleitflächen können je nach Bedarf möglichst vorsprungsfrei ausgeformt sein. Beispielsweise kann vorgesehen sein, Gleitflächen beispielsweise mit einem Lack vergütet sind.

An dem ersten Stirnkörper 4 des ersten Behälterelementes 1 sind am äußeren Umfang Stehbolzen 10a, 10b angeordnet. Die Stehbolzen 10a, 10b erstrecken sich im Wesentlichen parallel zur Symmetrieachse 3 und sind symmetrisch auf einem Umlauf um die Symmetrieachse 3 verteilt angeordnet. Die Stehbolzen 10a, 10b sind an dem ersten Stirnkörper 4 mittels Muttern verschraubt. Die Stehbolzen 10a, 10b verbinden einen Kolben 11 mit dem ersten Stirnkörper 4 des ersten Behälterelementes 1. Der Kolben 11 ist vorwiegend als Ringkörper ausgeführt, welcher abgestützt an den Stehbolzen 10a, 10b außenmantelseitig das zweite Behälterelement 2 umgreift. Der Kolben 11 ist innerhalb eines gegengleich ausgeformten Zylinders angeordnet und zu diesem verschieblich gelagert. Dabei ist der Zylinder mit Kreisringform innenmantelseitig von der Gleitfläche des zweiten Behälterelementes 2 begrenzt. Außenmantelseitig ist der Zylinder durch ein Stützelement 12 begrenzt. Das Stützelement 12 ist vorwiegend in Form eines Rohres ausgeformt, wobei eine Innenmantelfläche der Stützelemente 12 zur Begrenzung des Zylinders als Gleitfläche (insbesondere kreiszylindrische Innenmantelfläche koaxial zur Symmetrieachse 3) angeordnet. Das Stützelement 12 in Rohrform ist an seinem einen Ende winkelstarr mit dem zweiten Anschlussflansch 7 des zweiten Behälterelementes 2 verbunden, wobei das Stützelement 12 den zwischen den beiden Behälterelementen 1, 2 befindlichen Kompensationsspalt überragt. An dem Ende, mit welchem das Stützelement 12 von dem zweiten Anschlussflansch 7 fortragt, also das Ende des Stützelementes 12, welches in Richtung des ersten Anschlussflansches 6 ragt, ist ein Zylinderboden 13 angeordnet, welcher einen fluiddichten Abschluss des Zylinders darstellt. Der Zylinderboden 13 umgreift das erste Behälterelement 1 und liegt auf der Gleitfläche des ersten Behälterelementes 1 außenmantelseitig auf. Der Zylinderboden 13, das Stützelement 12 sowie der Kolben 11 sind Teil einer Dichtungsanordnung, mittels welcher der zwischen den beiden Behälterelementen 1, 2 befindliche Kompensationsspalt fluiddicht abgedichtet ist. Die Dichtungsanordnung weist dazu in dem Zylinderboden 13 sowie dem Kolben 11 jeweils eine erste und eine zweite in Richtung der jeweiligen Gleitfläche des jeweiligen Behälterelementes 1, 2 geöffnete umlaufende Nut 14 auf. In den Nuten 14 sind elastisch verformbare Dichtelemente, beispielsweise elastomere O-Ringe eingelegt, welche zu der jeweils zugeordneten Gleitfläche eine Gleitdichtung ausbilden. Die Nuten 14 in dem Zylinderboden 13 bzw. in dem Kolben 11 sind in axialer Richtung jeweils von Gleitelementen 15 flankiert. Die Gleitelemente 15 sind beispielsweise in Form von Kunststoffringen in den Zylinderboden 13 bzw. den Kolben 11 eingelassen, so dass eine gleitende Stützwirkung zwischen der jeweiligen Gleitfläche des jeweiligen Behälterelementes 1, 2 und dem Kolben 11 bzw. dem Zylinderboden 13 sichergestellt ist. Die Gleitelemente 15 schützen weiterhin die Dichtelemente in den Nuten 14 vor einer Überbeanspruchung.

Zusätzlich ist der relativ zu der Gleitfläche des zweiten Behälterelementes 2 sowie relativ zu dem Stützelement 12 bewegbare Kolben 11 an seiner äußeren Umfangsfläche mit sich radial nach außen öffnenden Nuten 16 versehen, in welche jeweils ein Dichtelement eingelegt ist. Die Dichtelemente (z. B. elastomere O-Ringe) in den radial nach außen öffnenden Nuten 16 dichten den Kolben 11 außenmantelseitig gegenüber der innenmantelseitig am Stützelement 12 angeordneten Gleitfläche ab und bilden jeweils eine Gleitdichtung.

Über den relativ zu dem zweiten Behälterelement 2 bewegbar angeordneten Kolben 11 sowie das relativ zu dem ersten Behälterelement 1 bewegbare Stützelement 12 beziehungsweise den Zylinderboden 13 ist eine fluiddichte Barriere über dem Kompensationsspalt zwischen den beiden einander zugewandten Enden des ersten Behälterelementes 1 sowie des zweiten Behälterelementes 2 gebildet. Bei einer Relativbewegung der beiden Behälterelemente 1, 2 in Richtung der Symmetrieachse 3 erfolgt aufgrund der winkelstarren Kopplung des Kolbens 11 mit dem ersten Behälterelement 1 sowie der winkelstarren Kopplung des Zylinderbodens 13 über das Stützelement 12 mit dem zweiten Behälterelement 2 eine axiale Verschiebung des Kolbens bezüglich des zweiten Behälterelementes 2 sowie des Zylinderbodens 13 bezüglich des ersten Behälterelementes 1. Dabei erfolgt innerhalb der Kolben-Zylinder-Anordnung (Kompensationsvolumen) eine Vergrößerung bzw. Verkleinerung des Volumens umgekehrt proportional zu einer Änderung des Volumens des Kompensationsspaltes zwischen den beiden Behälterelementen 1, 2. Somit kann eine kraftentlastete Relativbewegung zwischen erstem und zweitem Behälterelement 1, 2 erfolgen. Trotz des innerhalb des Druckbehälters und damit innerhalb des ersten Behälterelementes 1 bzw. des zweiten Behälterelementes 2 befindlichen Überdrucks kann eine annähernd gegenkraftfreie Relativbewegung erzeugt werden. Durch das Kompensationsvolumen ist das innerhalb der Druckbehälteranordnung unter Überdruck befindliche Fluid von Differenzdruckkräften entlastet bewegbar.

Die Dichtungsanordnung sowie das erste und das zweite Behälterelement 1, 2 sind von einem Hüllmantel 17 umgriffen. Vorwiegend ist der Hüllmantel 17 als metallisches Wellrohr ausgeformt, welches einen derartigen Querschnitt aufweist, das sowohl das erste wie das zweite Behälterelement 1, 2 als auch der Zylinderboden 13, das Stützelement 12, sowie der Kolben 11 von dem Hüllmantel 17 umgriffen sind. Der Hüllmantel 17 ist im Wesentlichen koaxial zur Symmetrieachse 3 angeordnet, wobei das metallische Wellrohr endseitig nach Art einer Losflanschanordnung mit dem ersten Anschlussflansch 6 sowie dem zweiten Anschlussflansch 7 winkelstarr verbunden ist. Eine Relativbewegung von erstem und zweitem Behälterelement 1, 2 wird über die Anschlussflansche 6, 7 auch auf den über Losflanschanordnungen winkelstarr mit den Anschlussflanschen 6, 7 verbundenen Hüllmantel 17 übertragen, so dass eine elastische Verformung des Hüllmantels 17 erfolgen kann.

Um eine kräftereduzierte Bewegung der Druckbehälteranordnung auch an dem von dem Hüllmantel 17 umgegriffenen Hohlvolumen zu gewährleisten, sind erste und zweite Überstromkanäle 18, 19 in dem ersten bzw. dem zweiten Anschlussflansch 6, 7 angeordnet. Die Überstromkanäle 18, 19 sind jeweils gleichartig ausgeformt, wobei in dem jeweiligen Anschlussflansch 6, 7 zur Ausbildung eines Überstromkanales 18, 19 eine radiale Sackbohrung eingebracht ist, welche durch eine parallel zur Symmetrieachse 3 ausgerichtete axiale Sackbohrung zu einem durchgehenden Überstromkanal 18, 19 vervollständigt ist. Somit mündet ein Überstromkanal 18, 19 zum Einen in radialer Richtung in einem der Anschlussflansche 6, 7 und zum Anderen in axialer Richtung innerhalb des Hohlvolumens, welches von dem Hüllmantel 17 umgegriffen ist. Somit ist es möglich, dass bei einer Relativbewegung von erstem und zweitem Behälterelement 1, 2 zueinander ein Druckausgleich zwischen dem Inneren des Hüllmantels 17 und der Umgebung des Hüllmantels 17 erfolgt. Um ein beliebiges Eindringen von Schmutzpartikeln, Feuchtigkeit etc. zu verhindern, sind jeweils die Mündungs-öffnungen der Überstromkanäle 18, 19 in den Anschlussflanschen 6, 7 mit einer Filteranordnung versehen.

Im Innern der Druckbehälteranordnung ist ein Phasenleiter 20 angeordnet. Der Phasenleiter 20 ist im Wesentlichen mit einem kreisförmigen Querschnitt ausgestattet, wobei der Phasenleiter 20 koaxial zur Symmetrieachse 3 angeordnet ist. Es kann auch vorgesehen sein, dass mehrere parallel zur Symmetrieachse 3 ausgerichtete Phasenleiter im Innern der Druckbehälteranordnung befindlich sind. Zur Abstützung des Phasenleiters 20 gegenüber einer Wandung der Druckbehälteranordnung ist vorliegend vorgesehen, dass ein Scheibenisolator 21 an dem zweiten Behälterelement 2 angeordnet ist. Dazu ist vorgesehen, dass der Scheibenisolator 21 zentrisch von dem Phasenleiter 20 durchsetzt ist, wobei am äußeren Umfang des Scheibenisolators 21 ein Rahmen angeordnet ist. Der Rahmen ist in den zweiten Stirnkörper 5, des zweiten Behälterelementes 2 eingesetzt. Dabei kann es vorgesehen sein, dass der Scheibenisolator 21 Ausnehmungen aufweist, so dass ein im Innern der Druckbehälteranordnung, also innerhalb des ersten und des zweiten Behälterelementes 1, 2 befindliches elektrisches isolierendes Fluid, vorzugsweise ein elektrisch isolierendes Gas wie Schwefelhexafluorid, durch den Scheibenisolator 21 hindurchtreten kann. Es kann jedoch auch vorgesehen sein, dass eine fluiddichte Barriere unter Nutzung des Scheibenisolators 21 an den zweiten Stirnkörper 5 des zweiten Behälterelementes 2 angeordnet ist.

Alternativ kann auch die Nutzung abweichender Formen von Isolatoren vorgesehen sein, beispielsweise können auch stabförmige Isolatoren, welche radial um die Symmetrieachse 3 herum angeordnet sind, den Phasenleiter 20 zentrisch in der Druckbehälteranordnung positionieren.

Bei einer Relativbewegung der beiden Behälterelemente 1, 2 zueinander kommt es zu einer Veränderung des zwischen den einander zugewandten Stirnseiten befindlichen Isolierfluid gefüllten Kompensationsspaltes. Nähern sich die beiden Behälterelemente 1, 2 verkleinert sich der Kompensationsspalt. Entfernen sich die beiden Behälterelemente 1, 2 voneinander, vergrößert sich der Kompensationsspalt. Entsprechend umgekehrt ändert sich die Ausdehnung des Kompensationsvolumens.

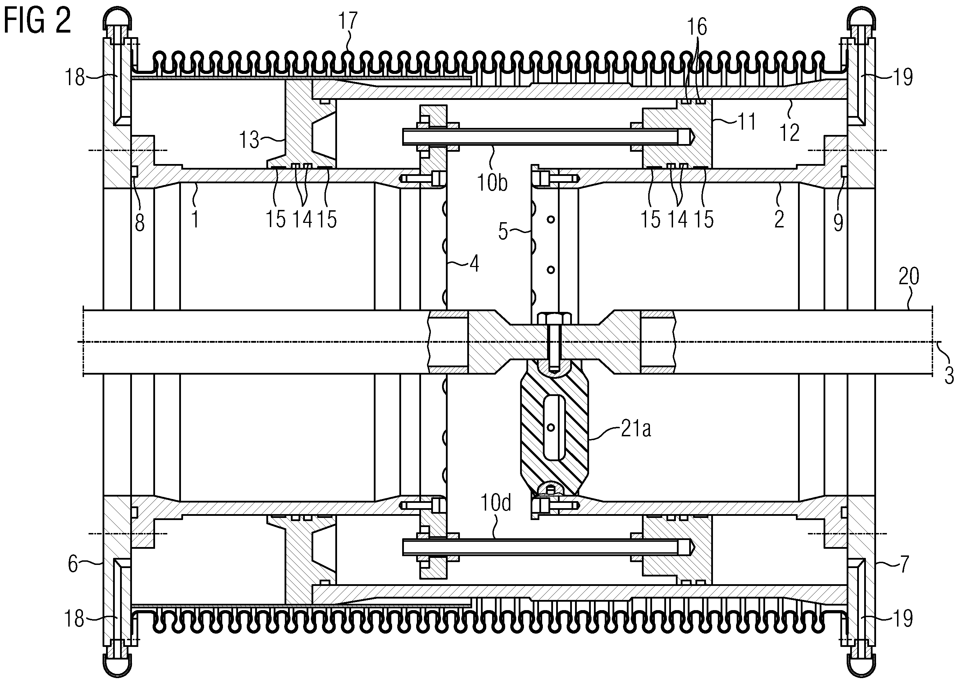

Die in Figur 2 gezeigte Variante entspricht bis auf die Ausgestaltung des Phasenleiters 20 sowie dessen Art der Abstützung der aus Figur 1 bekannten Druckbehälteranordnung.

Der Phasenleiter 20 ist vorliegend als Hohlleiter ausgeführt, wobei im Bereich seiner mechanischen Abstützung ein Zwischenstück aus Vollmaterial eingesetzt ist. Im Zwischenstück ist ein verjüngter Abschnitt gebildet, in welchem ein Stützisolator 21a verschraubt ist. Der verjüngte Abschnitt dient einer dielektrischen Schirmung der Befestigungsstelle sowie der Befestigungsmittel des Stützisolators 21a. Der Stützisolator 21a ist über eine Schraube mit dem Phasenleiter 20 verschraubt. Mit seinem von dem Phasenleiter 20 abgewandten Ende liegt der Stützisolator 21a innenmantelseitig am Stirnkörper 5 des zweiten Behälterelementes 2 an. Im Stirnkörper 5 sind mehrere radiale Ausnehmungen angeordnet, durch welche der in Figur 1 gezeigte Scheibenisolator 21 mit dem Stirnkörper 5 verschraubt ist. Der Stützisolator 21a nutzt eine dieser Ausnehmungen, um ebenfalls mit dem Stirnkörper 5 verschraubt zu werden. Der Stützisolator 21a kann verschiedene Formgebungen aufweisen. Vorliegend ist der Stützisolator 21a mit einer quer zur Stützrichtung verlaufenden Ausnehmung ausgestattet.

## Patentansprüche

1. Druckbehälteranordnung mit einem längenveränderlichen Kompensationsabschnitt, welcher ein erstes und ein zweites Behälterelement (1, 2) aufweist, die relativ zueinander bewegbar und über eine Dichtungsanordnung (11, 13) miteinander fluiddicht verbunden sind,
wobei die Dichtungsanordnung (11, 13) mit einer Gleitdichtung verbunden ist, welche Teil einer druckfesten Fluidbarriere ist und welche zwischen einer Gleitfläche eines der Behälterelemente (2,3) und einem Dichtelement der Dichtungsanordnung ausgebildet ist, welches verschieblich entlang der Gleitfläche gelagert ist, **dadurch gekennzeichnet, dass** die Dichtungsanordnung (11, 13) und die Gleitdichtung von einem Hüllmantel (17) umgriffen sind, welcher innenmantelseitig und außenmantelseitig von einem oder mehreren differenzdruckausgeglichenen Medium/Medien umspült ist.

2. Druckbehälteranordnung nach Anspruch 1,
**dadurch gekennzeichnet, dass** der Hüllmantel (17) elektrisch leitend mit den beiden Behälterelementen (1, 2) kontaktiert ist und eine Rückstrombrücke über der Dichtungsanordnung (11, 13) ausbildet.

3. Druckbehälteranordnung nach einem der Ansprüche 1 oder 2, **dadurch gekennzeichnet, dass** an den beiden Behälterelementen (1, 2) an voneinander abgewandten Enden jeweils ein Verbindungsflansch (6, 7) angeordnet ist, zwischen welchen sich der Hüllmantel (17) erstreckt.

4. Druckbehälteranordnung nach einem der Ansprüche 1 bis 3, **dadurch gekennzeichnet, dass** ein Überströmkanal (18,19) ein zwischen dem Hüllmantel (17) und zumindest einem Behälterelement (1, 2) und/oder zwischen zumindest einem Behälterelement (1, 2) und der Dichtungsanordnung (11, 13) angeordnetes Hohlvolumen mit der Umgebung des Hüllmantels (17) verbindet.

5. Druckbehälteranordnung nach Anspruch 4,
**dadurch gekennzeichnet, dass** der Überströmkanal (18, 19) sich zumindest abschnittsweise durch einen Verbindungsflansch (6, 7) erstreckt.

6. Druckbehälteranordnung nach einem der Ansprüche 1 bis 5,
**dadurch gekennzeichnet, dass** die Druckbehälteranordnung ein Kompensationsvolumen aufweist, in welchem umgekehrt proportional zur Änderung eines Druckbehältervolumens eine Volumenänderung erfolgt, wobei das Kompensationsvolumen von dem Hüllmantel (17) umgriffen ist.

7. Druckbehälteranordnung nach Anspruch 6,
**dadurch gekennzeichnet, dass** das Kompensationsvolumen zumindest teilweise von einer Kolben-Zylinder-Anordnung (11, 12, 13) begrenzt ist, wobei der Kolben mit dem einen Behälterelement (1, 2) und der Zylinder (12) mit dem anderen Behälterelement (1, 2) winkelsteif verbunden ist.

## Claims

1. Pressure vessel arrangement having a variable-length compensation portion which has a first and a second vessel element (1, 2) which are movable relative to one another and connected to one another in a fluid-tight manner by means of a seal arrangement (11, 13),
wherein the seal arrangement (11, 13) is connected to a sliding seal which is part of a pressure-resistant fluid barrier and which is formed between a sliding surface of one of the vessel elements (2, 3) and a sealing element of the seal arrangement, which sealing element is mounted displaceably along the sliding surface,
**characterized in that**
the seal arrangement (11, 13) and the sliding seal are engaged around by a sleeve shell (17), one or more differential-pressure-balanced medium/media flowing around said sleeve shell on the inner shell side and on the outer shell side.

2. Pressure vessel arrangement according to Claim 1, **characterized in that**
the sleeve shell (17) is in electrically conductive contact with the two vessel elements (1, 2) and forms a return current bridge via the seal arrangement (11, 13).

3. Pressure vessel arrangement according to one of Claims 1 and 2,
**characterized in that**,
on the two vessel elements (1, 2), at ends facing away from each other, there is arranged in each case one connecting flange (6, 7), between which the sleeve shell (17) extends.

4. Pressure vessel arrangement according to one of Claims 1 to 3,
**characterized in that**
a flow transfer duct (18, 19) connects a hollow volume, which is arranged between the sleeve shell (17) and at least one vessel element (1, 2) and/or between at least one vessel element (1, 2) and the seal arrangement (11, 13), to the surroundings of the sleeve shell (17).

5. Pressure vessel arrangement according to Claim 4, **characterized in that**
the flow transfer duct (18, 19) extends at least in portions through a connecting flange (6, 7).

6. Pressure vessel arrangement according to one of Claims 1 to 5,
**characterized in that**
the pressure vessel arrangement has a compensation volume in which a change in volume takes place which is inversely proportional to the change in a pressure vessel volume, wherein the compensation volume is engaged around by the sleeve shell (17) .

7. Pressure vessel arrangement according to Claim 6, **characterized in that**
the compensation volume is delimited at least partially by a piston-cylinder arrangement (11, 12, 13), wherein the piston is connected in an angularly rigid manner to the one vessel element (1, 2), and the cylinder (12) is connected in an angularly rigid manner to the other vessel element (1, 2).

## Revendications

1. Agencement de réservoir sous pression ayant une partie de compensation de longueur variable, qui a un premier et un deuxième éléments (1, 2) de réservoir, qui sont mobiles l'un par rapport à l'autre et qui sont reliés entre eux d'une manière étanche au fluide par un agencement (11, 13) d'étanchéité,
l'agencement (11, 13) d'étanchéité étant relié à une étanchéité à glissement, qui fait partie d'une barrière au fluide résistante à la pression et qui est constituée entre une surface de glissement de l'un des éléments (2, 3) du réservoir et un élément étanche de l'agencement d'étanchéité, qui est monté coulissant suivant la surface de glissement, **caractérisé en ce que**
l'agencement (11, 13) d'étanchéité et l'étanchéité à glissement sont enveloppés d'une enveloppe (17), autour de laquelle passe, du côté de la face intérieure et du côté de la face extérieure, un fluide/des fluides compensés en différence de pression.

2. Agencement de réservoir sous pression suivant la revendication 1,
**caractérisé en ce que**
l'enveloppe (17) est en contact, d'une manière conductrice de l'électricité, avec les deux éléments (1, 2) du réservoir et constitue un pont de courant en retour par l'agencement (11, 13) d'étanchéité.

3. Agencement de réservoir sous pression suivant la revendication 1 ou 2,
**caractérisé en ce que**,
sur les deux éléments (1, 2) du réservoir, est disposée, à des extrémités éloignées l'une de l'autre, respectivement une bride (6, 7) de liaison, entre lesquelles s'étend l'enveloppe (17).

4. Agencement de réservoir sous pression suivant l'une des revendications 1 à 3,
**caractérisé en ce qu'**
un conduit (18, 19) de trop plein met, en communication avec l'atmosphère ambiante de l'enveloppe (17), un volume vide disposé entre l'enveloppe (17) et au moins un élément (1, 2) du réservoir et/ou entre au moins un élément (1, 2) du réservoir et l'agencement (11, 13) d'étanchéité.

5. Agencement de réservoir sous pression suivant la revendication 4,
**caractérisé en ce que**
le conduit (18, 19) de trop plein passe, au moins par tronçon, à travers une bride (6, 7) de liaison.

6. Agencement de réservoir sous pression suivant l'une des revendications 1 à 5,
**caractérisé en ce que**
l'agencement de réservoir sous pression a un volume de compensation, dans lequel a lieu une variation de volume inversement proportionnelle à la variation d'un volume du réservoir sous pression, le volume de compensation étant enveloppé de l'enveloppe (17).

7. Agencement de réservoir sous pression suivant la revendication 6,
**caractérisé en ce que** le volume de compensation est délimité, au moins en partie, par un agencement (11, 12, 13) piston-cylindre, le piston étant relié à angle fixe à l'un des éléments (1, 2) du réservoir et le cylindre (12) à l'autre élément (1, 2) du réservoir.
